(19) Europäisches Patentamt
European Patent Office
Office européen des brevets

(11) Veröffentlichungsnummer: **0 169 804**
**B1**

(12) # EUROPÄISCHE PATENTSCHRIFT

(45) Veröffentlichungstag der Patentschrift: **18.10.89**

(51) Int. Cl.⁴: **C 09 D 5/44**

(21) Anmeldenummer: **85810286.6**

(22) Anmeldetag: **21.06.85**

(54) **Verfahren zum Beschichten von Metalloberflächen.**

(30) Priorität: **27.06.84 GB 8416389**

(43) Veröffentlichungstag der Anmeldung:
**29.01.86 Patentblatt 86/5**

(45) Bekanntmachung des Hinweises auf die Patenterteilung:
**18.10.89 Patentblatt 89/42**

(84) Benannte Vertragsstaaten:
**CH DE FR GB IT LI NL SE**

(56) Entgegenhaltungen:
**EP-A- 0 022 081**
**EP-A- 0 074 073**
**US-A- 4 416 752**

**MAKROMOLEKULARE CHEMIE, RAPID COMMUNICATIONS, Band 4, 1983, Seiten 259-261, Basel, CH; U.AKBULUT et al.: "Electroinitiated cationic polymerization of some epoxides by direct electron transfer"**

(73) Patentinhaber: **CIBA-GEIGY AG, Klybeckstrasse 141, CH-4002 Basel (CH)**

(72) Erfinder: **Banks, Christopher Paul, 105 Ross Close, Saffron Walden Essex CB11 4DU (GB)**
Erfinder: **Irving, Edward, Dr., 41, Swaffham Road, Burwell Cambridge CB5 OAN (GB)**

**EP 0 169 804 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren zum Beschichten von Metalloberflächen, indem ein kationisch polymerisierbares Epoxidharz in Gegenwart eines Salzes auf der Oberfläche polymerisiert wird.

Metalloberflächen wurden bisher in Gegenwart von Salzen, die sich elektrolytisch zersetzen, mit kationisch polymerisierbaren Materialien beschichtet. Die U.S. Patentschrift Nr. 4 416 752 z.B. beschreibt ein Beschichtungsverfahren, bei dem ein Metall-Substrat oder ein metallisiertes nichtleitendes Substrat als Anode in einem elektrolysierten Gemisch aus einem kationisch polymerisierbaren organischen Material und einem Aryliodonium- oder Arylsulfoniumsalz mit einem Anion $MQ_d$ verwendet wird. Dabei bedeutet M ein Metall oder ein Metalloid ausgewählt aus Bor, Phosphor, Antimon und Arsen, Q ist ein Halogen und d bedeutet 4–6. Geeignete kationisch polymerisierbare Materialien sind z.B. Mono- und Polyepoxide, Vinylverbindungen, cyclische Äther, cyclische Ester und Gemische davon. Verglichen mit bekannten Verfahren zur galvanischen Abscheidung von Polymeren hat dieses Verfahren den Vorteil, dass die polymerisierbaren Materialien selbst nicht besonders formuliert werden müssen, damit ist galvanisch abgeschieden werden können.

Die in der genannten U.S. Patentschrift beschriebenen Aryliodonium- und Arylsulfoniumsalze sind in zweifacher Hinsicht nachteilig.

Einerseits sind sie lichtempfindlich, so dass Gemische aus kationisch polymerisierbaren Materialien und solchen Salzen – ausser sie werden in völliger Dunkelheit aufbewahrt – nur eine beschränkte Lagerstabilität aufweisen. Solche Gemische enthaltende galvanische Abscheidungsbäder müssen unter sorgfältig kontrollierten Lichtverhältnissen angewendet werden, damit ein frühzeitiges Gelieren vermieden wird. Andererseits ist die Zubereitung dieser Gemische schwierig und damit kostspielig, so dass sich das beanspruchte Verfahren zurzeit in grosstechnischem Massstab nicht in wirtschaftlicher Weise durchführen lässt.

Die Verwendung quaternärer Ammoniumhexafluorphosphate oder -tetrafluorborate als Elektrolyte für die elektroinitiierte kationische Polymerisation verschiedener Expoxide ist bekannt und ist von U. Akbulut et al., Makromol. Chem., Rapid Commun., 4 259–261 (1983), U. Akbulut et al., British Polymer Journal, 15, 179–182 (1983) und A.M. Onal et al., British Polymer Journal., 15, 187–189 (1983) beschrieben. Diese Publikationen beschreiben die Polymerisierung von Epoxycyclohexan, 1,2-Epoxy-4-epoxyethylcyclohexan, Epoxyclopentan und Epoxystyrol durch Elektrolyse bei einer konstanten Spannung von höchstens 3 Volt während etwa 1½ Stunden. Es wird bei tiefen Spannungen gearbeitet um eine Teilnahme des Elektrolytsalzes an der Reaktion zu vermeiden. Eine frühere Arbeit von U. Akbulut et al., J. Polymer Science: Polymer Chem. Ed., 13, 133–149 (1975) über die Polymerisierung von Styrol hat gezeigt, dass $BF_4^-$ bei etwa +2,5 bis +3,0 V oxidiert wird, so dass bei Spannungen die darüber liegen die kationische Polymerisation die Bildung eines Initiators oder einer radikalischen Zwischenstufe durch Oxidation des Elektrolytenanions umfasst. Nachdem das Ziel der späteren Veröffentlichungen ein Vergleich des Polymers, das durch die galvanische Abscheidung initiierte Polymerisierung erhalten wird, mit dem Polymer, das durch Gammastrahlen-initiierte Polymerisation erhalten wird, war, war es wichtig den Anteil an Produkten, die durch die Reaktion von radikalischen Zwischenstufen gebildet werden minimal zu halten. Aus diesem Grund wurde ausschliesslich bei tiefen Spannungen gearbeitet. Bei diesen tiefen Spannungen war die Polymerisationsgeschwindigkeit zu langsam, um in der Praxis anwendbar zu sein. Ferner wird auch in keiner der diskutierten Veröffentlichungen irgendeine praktische Verwendbarkeit des Verfahrens erwähnt.

Die europäische Patentanmeldung Nr. 0 106 352 beschreibt die elektrolytische Polymerisierung bestimmter Epoxide auf Kohlenstofffasern. Dabei wird ein reaktives Monomer, das ein aliphatisches oder ein alicyclisches Epoxid sein kann, in einem Lösungsmittel mit einem Elektrolyten vermischt und wird auf der Oberfläche von Kohlenstoffaser-Rovings polymerisiert, wenn ein Gleichstrom von 5–25 Volt hindurchgeleitet wird. Geeignete Elektrolyte sind z.B. Alkalimetall- und Ammoniumhalogenide, -sulfate, -nitrate, -perchlorate, -sulfonate, carboxylate und tetrafluorborate.

Es wird gesagt, dass die elektrolytische Polymerisation von reaktiven Monomeren auf Metallelektroden zwar bekannt ist, dass aber die Möglichkeit das Verfahren praktisch anzuwenden wegen der kleinen Polymerisationsaktivität der Monomeren und der limitierten Menge des auf dem Metall abgeschiedenen Monomeren sehr beschränkt ist. Es wird auch eine Wechselwirkung zwischen der Oberfläche der Kohlenstoffaser und des Polymers postuliert, die stärker als die physikalische Wechselwirkung der normalen van der Waals Adsorption ist. Diese Wechselwirkung ist aber nicht das Resultat einer einfachen Vernetzung des Harzes, weil ebenso erläutert wird, dass eine ausgeprägte thermische Polymerisation die Kohäsion und die Einheitlichkeit des Verbundes beeinträchtigt. Diese Veröffentlichung beschreibt daher ein Verfahren zum Beschichten von Kohlenstoffasern damit eine Wechselwirkung zwischen der Faser und der Beschichtung entsteht und die Faser besser für die Herstellung von Kohlenstoffaser-Verbundwerkstoffen geeignet ist. Das Applizieren eines ganz ausgehärteten Überzugs oder ein allgemeines, auf verschiedene Substrate anwendbares Verfahren werden in der erwähnten EP-Anmeldung nicht beschrieben.

Es wurde nun gefunden, dass es bei Verwendung bestimmter Salze bei einer Spannung von mindestens 15 Volt möglich ist das Epoxidharz galvanisch in einer vernetzten, oder mindestens

teilweise vernetzten Form auf einer Metalloberfläche abzuscheiden ohne jeglichen Nachteil der früheren Methoden in Kauf nehmen zu müssen. Obwohl die Nützlichkeit der Erfindung nicht davon abhängt, wird vermutet, dass der Stromfluss die Bildung einer reaktiven Spezies aus dem Salz auf der Metalloberfläche die als Anode wirkt, verursacht, und dass diese reaktive Spezies dann als Härter für das Epoxidharz wirkt. Ein Kontakt des Epoxidharzes, das nicht von sich aus galvanisch abscheidbar sein muss, mit der reaktiven Spezies auf der Anodenoberfläche verursacht die Abscheidung des Epoxidharzes. Diese Abscheidung des gehärteten oder mindestens teilweise gehärterten Epoxidharzes auf der Anode findet schnell, meistens innerhalb von einigen Sekunden, statt. Daher stellt diese Methode ein einfaches und schnelles Verfahren zum Beschichten von metallischen Oberflächen mit Epoxidharzen dar, das vorher nicht bekannt war. Die dabei verwendeten Salze sind in den meisten Fällen nicht lichtempfindlich. Bei diesen Salzen kann es sich um metallische Salze, einschliesslich organometallischer und komplexierter metallischer Salze, um heterocyclische, Ammonium-, Sulfoxonium-, substituierte Ammonium- und Phosphoniumsalze mit Anionen, die beim Ansetzen einer Stromspannung von mindestens 15 Volt eine reaktive Spezies an der Anode freisetzen, handeln.

Gegenstand der Erfindung ist somit ein Verfahren zum Beschichten von Metalloberflächen indem man zwischen der Metalloberfläche als Anode und einer Kathode, die beide mit einem Stoffgemisch enthaltend (A) ein Epoxidharz und (B) ein Salz der Formel I

$$[A^{y+}][Z^-]_y \qquad (I)$$

in Berührung stehen, einen Strom einer Spannung von mindestens 15 Volt hindurchleitet, wobei im Salz (B) $A^{y+}$ ein Metall-, Metallkomplex-, organometallisches, heterocyclisches, Ammonium-, Sulfoxonium-, substituiertes Ammonium oder Phosphoniumkation und y 1, 2 oder 3 bedeutet auf $Z^-$ für einen Anion ausgewählt aus der Gruppe Perchlorat, Trifluormethansulfonat, Pentafluorhydroxoantimonat und komplexe Anionen der Formel $MQ_d^-$ steht, worin M ein Metall- oder Metalloidatom ausgewählt aus Bor, Phosphor, Antimon und Arsen, Q ein Halogenatom und d 4 oder 6 bedeuten, wobei d um eins grösser ist als die Wertigkeit von M.

Das erfindungsgemässe Verfahren eignet sich insbesondere für die Beschichtung von eisenhaltigen Metallen, wie z.B. Stahlblech, als Korrosionsschutz.

Als Kationen $A^{y+}$ eignen sich z.B. die Kationen von Metallen, besonders Alkali- und Erdalkalimetallen, wie Natrium, Kalium, Magnesium oder Calcium, Ammoniumkationen, substituierte Phosphoniumkationen der Formel II

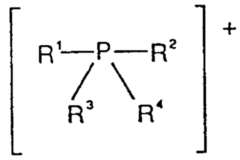

(II)

und substituierte Ammoniumkationen der Formel III

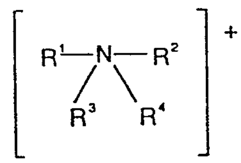

(III)

worin $R^1$, $R^2$, $R^3$ und $R^4$ unabhängig voneinander unsubstituierte oder substituierte Alkyl-, Alkenyl-, Aryl-, Aralkyl-, Cycloalkyl- oder Cycloalkylalkylgruppen darstellen, oder $R^1$ und $R^2$ und/oder $R^3$ und $R^4$ zusammen mit dem Stickstoff- oder Phosphoratom, an das sie gebunden sind, einen heterocyclischen Ring bilden, der ein oder mehrere weitere Heteroatome enthalten kann.

Als Kationen $A^{y+}$ eignen sich ferner aliphatische Sulfoxoniumkationen, wie das Trimethylsulfoxonium- und Acetylmethyldimethylsulfoxoniumkation, heterocyclische Kationen wie 2,4,6-Alkyl oder -Arylpyryliumkationen, komplexierte Metallkationen, wie Übergangsmetallammonium- oder -amin-Komplexkationen, und organo-metallische Kationen, wie die $\eta^5$-Cyclopentadienyltricarbonyl-, $\eta^6$-Aren-tricarbonyl-, $\eta^7$-Cycloheptatrienyltricarbonyl-, Bis($\eta^5$-cyclopentadienyl)-, Bis($\eta^6$-Aren)- und ($\eta^6$-Aren)($\eta^5$-cyclopentadienyl)-Übergangsmetallkationen.

Bevorzugt verwendet man im erfindungsgemässen Verfahren Natrium-, Kalium-, Magnesium, $\eta^6$-Arentricarbonyl- und ($\eta^6$-Aren)($\eta^5$-cyclopentadienyl)-Eisen-, -Mangan-, -Kobalt-, -Chrom-, -Wolfram- und Molybdän-Salze, Ammonium-, substituierte Phosphonium und Ammoniumsalze der Formeln II und III, worin $R^1$, $R^2$, $R^3$ und $R^4$ unabhängig voneinander unsubstituierte Alkylgruppen mit 1–6 C-Atomen, Aralkylgruppen mit 7–10 C-Atomen oder Arylgruppen mit 6–10 C-Atomen darstellen, wobei die Salze als Anionen, Trifluormethansulfonat-, Perchlorat-, Tetrafluorborat-, Hexafluorphosphat-, Hexafluorarsenat- oder Hexafluorantimonat-Ionen aufweisen.

Epoxidharze sind Verbindungen mit mehr als einer 1,2-Epoxidgruppe pro Molekül. Vorzugsweise wird ein cycloaliphatisches Epoxidharz, wie 3,4-Epoxycyclohexylmethyl-3',4'-epoxycyclohexancarboxylat oder dessen 6,6'-Dimethylderivat, Ethylenglykol-bis(3,4-epoxycyclohexancarboxylat), Bis(3,4-epoxycyclohexylmethyl)adipat, Dicyclopentadiendioxid oder Vinylcyclohexendioxid, ein gegebenenfalls vorverlängerter Polyglycidylether eines mehrwertigen Alkohols, wie 1,4-Butandiol oder Diethylenglykol, oder eines mehrwertigen Phenols, wie 2,2-Bis(4-hydroxyphenyl)-propan oder Phenyl-Aldehyd-Novolake, ein Polyglycidylester einer Polycarbonsäure, wie Phthalsäure, Tetrahydrophthalsäure, Trimellitsäure oder Pyromellitsäure verwendet.

Das erfindungsgemässe Verfahren wird zweckmässig so durchgeführt, dass man das Epoxidharz mit dem Salz in einem organischen oder wässrig-organischen Lösungsmittel vermischt, eine Metalloberfläche als Anode und als Kathode ein inertes Metall einführt, und Strom durchleitet, bis sich auf der Anode eine ausreichend dicke Schicht des polymerisierten Materials abgeschieden hat. Die Anode wird dann aus dem Bad entfernt und getrocknet, im allgemeinen bei erhöhter Temperatur. Durch Umpolen des Stroms oder durch Verwendung von Wechselstrom kann auf beiden Elektroden polymerisiertes Harz abgeschieden werden. Die einzusetzende Menge an Salz kann innerhalb ziemlich breiter Grenzen variieren, liegt jedoch normalerweise zwischen 0,1 und 10 Gew.-%, bezogen auf das Gewicht des Epoxidharzes. Die Konzentration des Epoxidharzes in der Lösung beträgt im allgemeinen zwischen 5 und 50 Gew.-%. Die Lösung wird vorzugsweise bei Raumtemperatur gehalten, kann aber gewünschtenfalls auch erhitzt oder gekühlt werden. Temperaturen zwischen 0 und 80°C haben sich als zufriedenstellend erwiesen. Als Lösungsmittel in diesem Verfahren kommen z.B. Ketone, wie Aceton, Methylethylketon und Methylisobutylketon, halogenierte Kohlenwasserstoffe, wie Dichlormethan, Chloroform und Tetrachlorethan, Nitroverbindungen, wie Nitromethan, Nitroethan und Nitrobenzol, und Gemische davon in Betracht. Es werden Spannungen, die höher als 15 V sind, im allgemeinen zwischen 15 V und 150 V, besonders zwischen 30 und 100 V verwendet. Für die Abscheidung einer zwischen 1 und etwa 30 Mikrometer dicken Schicht wird im allgemeinen eine Stromstärke zwischen 10 mA und 10 A benötigt.

Die Erfindung wird durch die folgenden Beispiele näher erläutert. Darin sind alle Teile Gewichtsteile.

Beispiel 1

1 Teil 2,2-Bis(4-glycidyloxyphenyl)propan mit einem Epoxidgehalt von 5,2 Äquivalenten/kg und 0,01 Teile Kaliumhexafluorphosphat werden in einem Gemisch aus 1 Teil Dichlormethan und 1 Teil Aceton gelöst. Eine Anode und eine Kathode, beide aus Weissblech, werden in die Lösung gegeben, und während 2 Sekunden wird bei 30 Volt Strom durchgeleitet. Die Anode wird aus dem Bad entfernt und 5 Minuten bei 90°C getrocknet. Die Beschichtung auf der Anode ist 13 Mikrometer dick, hart und klebefrei.

Wird der Versuch ohne Strom wiederholt, so erhält man auf dem Weissblech eine klebrige nicht gehärtete Schicht. Wird der Versuch mit Strom, aber ohne das Kaliumsalz durchgeführt, so erhält man auf dem Weissblech ebenfalls eine klebrige nicht gehärtete Schicht.

Beispiel 2

Beispiel 1 wird wiederholt, jedoch unter Ersatz des Kaliumsalzes durch eine gleiche Menge Natriumtetrafluorborat und Zusatz von 0,1 Teilen Wasser zum Lösungsmittelgemisch. Während 30 Sekunden wird bei 30 Volt Strom durchgeleitet. Man erhält eine harte, klebefreie, 13 Mikrometer dicke Schicht.

Wird der Versuch ohne Strom wiederholt, so bildet sich auf dem Weissblech eine klebrige nicht gehärtete Schicht.

Beispiel 3

Beispiel 1 wird wiederholt, jedoch unter Ersatz des Kaliumsalzes durch eine gleiche Menge Tetramethylammoniumhexafluorphosphat. Nach 10 Sekunden Durchleiten von Strom und 5 Minuten Trocknen bei 90°C erhält man eine klebefreie, harte, 8 Mikrometer dicke Schicht.

Wird dieser Versuch ohne Strom wiederholt, so erhält man lediglich eine klebrige, nicht gehärtete Schicht.

Beispiel 4

Beispiel 1 wird wiederholt, wobei das Kaliumsalz durch eine gleiche Menge Kaliumhexafluorarsenat ersetzt wird. Während 10 Sekunden wird Strom durchgeleitet und 5 Minuten bei 90°C getrocknet. Man erhält eine klebefreie, harte, 7 Mikrometer dicke Schicht.

Wird dieser Versuch ohne Strom wiederholt, so erhält man lediglich eine klebrige, nicht gehärtete Schicht.

Beispiel 5

1 Teil 3,4-Epoxycyclohexylmethyl-3',4'-epoxycyclohexancarboxylat und 0,02 Teile Tetramethylammoniumtetrafluorborat werden in einem Gemisch aus 1 Teil Dichlormethan und 1 Teil Aceton gelöst. In der Lösung werden eine Anode und eine Kathode, beide aus Weissblech, angeordnet, und während 30 Sekunden wird bei 30 Volt Strom durchgeleitet. Die Anode wird aus dem Bad entfernt und 5 Minuten bei 90°C getrocknet. Die Beschichtung auf der Anode ist 25 Mikrometer dick, hart und klebefrei. Beim Wiederholen dieses Versuchs ohne Strom erhält man lediglich eine klebrige, nicht gehärtete Beschichtung. Dasselbe Resultat wird erzielt, wenn man den Versuch mit Strom, aber ohne Tetramethylammoniumsalz durchführt.

Beispiel 6

1 Teil eines epoxidierten Novolakes aus einem Phenol-Formaldehyd-Novolak mit einem Ausgangs-Verhältnis Phenol:Formaldehyd von 1,75:1 (Epoxidgehalt = 5,5 Äquivalente/kg) und 0,02 Teile Tetramethylammoniumhexafluoroantimonat werden in einem Gemisch aus 3 Teilen Methylisobutylketon und 0,5 Teilen Aceton gelöst. In der Lösung werden eine Anode und eine Kathode aus Weissblech angeordnet, und während 30 Sekunden wird bei 30 Volt Strom durchgeleitet. Die Anode wird aus dem Bad entfernt und 5 Minuten bei 90°C getrocknet. Die Beschichtung auf der Anode ist 5 Mikrometer dick, hart und klebefrei.

Wird dieser Versuch ohne Strom wiederholt,

so erhält man lediglich eine klebrige, nicht gehärtete Schicht.

Beispiel 7

1 Teil 2,2-Bis(4-glycidyloxyphenyl)propan (Epoxidgehalt 4,2 Äquivalente/kg) und 0,03 Teile Kaliumperchlorat werden in einem Gemisch aus 2,5 Teilen Aceton und 0,5 Teilen Wasser gelöst. In der Lösung werden eine Anode und eine Kathode aus Weissblech angeordnet, und während 30 Sekunden wird bei 30 Volt Strom hindurchgeleitet. Die Anode wird aus dem Bad entfernt und 5 Minuten bei 90 °C getrocknet. Die Beschichtung auf der Anode ist 10 Mikrometer dick, hart und klebefrei. Beim Wiederholen dieses Versuchs ohne Strom erhält man lediglich eine klebrige, nicht gehärtete Schicht.

Beispiel 8

1 Teil 3,4-Epoxycyclohexylmethyl-3',4'-epoxycyclohexancarboxylat und 0,1 Teil Ammoniumtetrafluorborat werden in einem Gemisch aus 2 Teilen Aceton, 1 Teil Dichlormethan und 0,5 Teilen Wasser gelöst. In der Lösung werden eine Anode und eine Kathode aus Weissblech angeordnet, und während 2 Sekunden wird bei 50 Volt Strom durchgeleitet. Die Anode wird aus dem Bad entfernt und 5 Minuten bei 90 °C getrocknet. Die Beschichtung auf der Anode ist 8 Mikrometer dick, hart und klebefrei. Wird dieser Versuch ohne Strom wiederholt, so erhält man lediglich eine klebrige, nicht gehärtete Schicht.

Beispiel 9

1 Teil 2,2-Bis(4-glycidyloxyphenyl)propan und 0,01 Teile ($\eta^6$-Toluol)tricarbonylmangan-Hexafluorphosphat werden in einem Gemisch aus 1 Teil Dichlormethan und 1 Teil Aceton gelöst. Während 30 Sekunden wird bei 30 Volt Strom hindurchgeleitet, wie in Beispiel 1 beschrieben. Die Anode wird entfernt, gewaschen und 5 Minuten bei 90 °C getrocknet. Sie weist eine klebefreie, 13 Mikrometer dicke Beschichtung auf.

Beispiel 10

1 Teil 2,2-Bis(4-glycidyloxyphenyl)propan und 0,01 Teil ($\eta^6$-Pyren) ($\eta^5$-cyclopentadienyl)Eisen(II)hexafluorphosphat werden in einem Gemisch aus 1 Teil Dichlormethan und 1 Teil Aceton gelöst. Das Harz wird wie in Beispiel 1 beschrieben galvanisch auf einer Weissblech-Anode abgeschieden, indem während 5 Minuten bei 30 Volt Strom hindurchgeleitet wird. Die Anode wird entfernt und 5 Minuten bei 90 °C getrocknet. Sie weist eine klebefreie, 8 Mikrometer dicke Beschichtung auf.

Beispiel 11

1 Teil 2,2-Bis(4-glycidyloxyphenyl)propan und 0,01 Teile Trimethylsulfoxoniumtetrafluorborat werden in 1 Teil Dichlormethan und 1 Teil Aceton gelöst. Das Harz wird wie in Beispiel 1 beschrieben auf einer Weissblech-Anode abgeschieden, indem man während 60 Sekunden bei 30 Volt Strom hindurchleitet. Die Anode wird entfernt und 5 Minuten bei 90 °C getrocknet. Sie weist eine klebefreie, 11 Mikrometer dicke Beschichtung auf.

Beispiel 12

1 Teil 1,4-Butandioldiglycidylether und 0,01 Teile Trimethylsulfoxoniumhexafluorphosphat werden in einem Gemisch aus 0,5 Teilen 2-Butoxyethanol und 1,5 Teilen Wasser gelöst. Das Harz wird wie in Beispiel 1 beschrieben galvanisch auf einer Weissblech-Anode abgeschieden, indem man während 120 Sekunden bei 50 Volt Strom hindurchleitet. Die Anode wird entfernt und 10 Minuten bei 90 °C getrocknet. Die erhaltene Beschichtung ist hart, klebefrei und 19 Mikrometer dick.

Beispiel 13

1 Teil 2,2-Bis(4-glycidyloxyphenyl)propan und 0,03 Teile Trimethylsulfoxoniumhexafluorphosphat werden in einem Gemisch aus 1 Teil Dichlormethan und 1 Teil Aceton gelöst. Das Harz wird unter Verwendung einer Weissblech-Kathode galvanisch auf einer Anode aus einem kupferkaschierten Laminat abgeschieden, indem man während 30 Sekunden bei 30 Volt Strom hindurchleitet. Die Anode wird entfernt und 5 Minuten bei 90 °C getrocknet. Sie weist eine klebefreie, 11 Mikrometer dicke Beschichtung auf.

Beispiel 14

Beispiel 8 wird wiederholt, wobei das Ammoniumtetrafluorborat durch 0,03 Teile Trimethylsulfoxoniumhexafluorphosphat ersetzt und während 2 Sekunden bei 100 Volt Strom hindurchgeleitet wird. Die erhaltene klebefreie Beschichtung ist 25 Miktrometer dick.

Beispiel 15

Beispiel 8 wird wiederholt, wobei das Ammoniumtetrafluorborat durch 0,03 Teile 2,4,6-Trimethylpyryliumperchlorat ersetzt und während 30 Sekunden bei 30 Volt Strom hindurchgeleitet wird.

Die erhaltene klebefreie Beschichtung ist 20 Mikrometer dick.

Beispiel 16

Beispiel 13 wird wiederholt, wobei das Hexafluorphosphat durch 0,01 Teile Trimethylsulfoxonium-hexafluorantimonat ersetzt wird. Das Harz wird während 2 Sekunden bei 100 Volt auf einer Weissblech-Anode abgeschieden. Die erhaltene harte, klebefreie Beschichtung ist 15 Mikrometer dick.

Beispiel 17

1 Teil 3,4-Epoxycyclohexylmethyl-3',4'-epoxycyclohexancarboxylat und 0,2 Teile Magnesiumtrifluormethansulfonat werden in einem Gemisch aus 2 Teilen Aceton und 0,5 Teilen Wasser gelöst. Eine Anode und eine Kathode aus Weissblech werden in die Lösung eingesetzt und ein Strom von 30 Volt wird während 10 Sekunden durchgeleitet. Die Anode wird entfernt und während 5 Minuten bei 90°C getrocknet. Die erhaltene harte klebefreie Beschichtung ist 6 Mikrometer dick. Eine Wiederholung des Versuchs ohne Strom ergibt nur einen klebrigen, nicht gehärteten Niederschlag.

Beispiel 18

Beispiel 1 wird wiederholt, indem die Anode des Beispiels 1 durch Stahl-, Aluminium- und Kupfer-Anoden ausgetauscht wird. In allen Fällen wird während 2 Sekunden ein Strom von 30 Volt durchgeleitet und dann wie vorher beschrieben getrocknet, was eine harte klebefreie Beschichtung auf dem Metall ergibt. Wenn die Versuche ohne Strom wiederholt werden, erhält man nur klebrige Niederschläge.

## Patentansprüche

1. Verfahren zum Beschichten von Metalloberflächen indem man zwischen der Metalloberfläche als Anode und einer Kathode, die beide mit einem Stoffgemisch enthaltend (A) ein Epoxidharz und (B) ein Salz der Formel I

$$[A^{y+}][Z^-]_y \quad (I)$$

in Berührung stehen, einen Strom einer Spannung von mindestens 15 Volt hindurchleitet, wobei im Salz (B) $A^{y+}$ ein Metall-, Metallkomplex-, organometallisches, heteterocyclisches, Ammonium-, Sulfoxonium-, substituiertes Ammonium oder Phosphoniumkation und y 1, 2 oder 3 bedeuten, und $Z^-$ für einen Anion ausgewählt aus der Gruppe Perchlorat, Trifluormethansulfonat, Pentafluorhydroxoantimonat und komplexe Anionen der Formel $MQ_d^-$ steht, worin M ein Metall- oder Metalloidatom ausgewählt aus Bor, Phosphor, Antimon und Arsen, Q ein Halogenatom und d 4 oder 6 bedeuten, wobei d um eins grösser ist als die Wertigkeit von M.

2. Verfahren nach Anspruch 1, worin die Metalloberfläche ein eisenhaltiges Metall ist.

3. Verfahren nach einem der vorhergehenden Ansprüche, worin das Kation $A^{y+}$ das Kation eines Metalls, ein Ammoniumkation, ein substituiertes Phosphoniumkation der Formel II

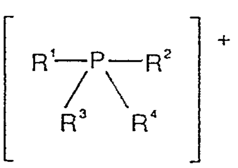

(II)

oder ein substituiertes Ammoniumkation der Formel III

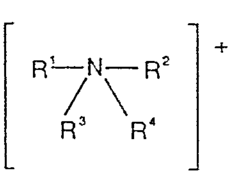

(III)

ist, worin $R^1$, $R^2$ $R^3$ und $R^4$ unabhängig voneinander unsubstituierte oder substituierte Alkyl-, Alkenyl-, Aryl-, Aralkyl-, Cycloalkyl- oder Cycloalkylalkylgruppen darstellen oder $R^1$ und $R^2$ und/oder $R^3$ und $R^4$ zusammen mit dem Stickstoff- oder Phosphoratom, an das sie gebunden sind, einen heterocyclischen Ring, der ein oder mehrere weitere Heteroatome enthalten kann, bilden.

4. Verfahren nach einem der vorhergehenden Ansprüche, worin das Salz ein Natrium-, Kalium-, Magnesium-, Ammonium-, substituiertes Phosphonium- oder Ammoniumsalz der Formel II oder III ist, worin $R^1$, $R^2$, $R^3$ und $R^4$ unabhängig voneinander unsubstituierte Alkylgruppen mit bis zu 6 C-Atomen, Aralkylgruppen mit 7 bis 10 C-Atomen oder Arylgruppen mit 6 bis 10 C-Atomen darstellen und das Anion des Salzes ein Trifluormethansulfonat-, Perchlorat-, Tetrafluorborat-, Hexafluorphosphat-, Hexafluorarsenat- oder Hexafluorantimonat-Ion ist.

5. Verfahren nach Anspruch 1 oder 2, worin das Kation $A^{y+}$ ein Trimethylsulfoxonium-, Acetylmethyldimethylsulfoxonium-, 2,4,6-Alkyl- oder -Arylpyrylium-, ein Übergangsmetallammonium- oder -Aminkomplex-, ein $\eta^5$-Cyclopentadienyltricarbonyl-, $\eta^6$-Arentricarbonyl-, $\eta^7$-Cycloheptatrienyltricarbonyl-, Bis($\eta^5$-cyclopentadienyl)-, Bis($\eta^6$-Aren)- oder($\eta^6$-Aren)-($\eta^5$-cyclopentadienyl)-Übergangsmetallkation ist.

6. Verfahren nach Anspruch 5, worin das Kation $A^{y+}$ $\eta^6$-Arentricarbonyl- oder($\eta^6$-Aren)($\eta^5$-cyclopentadienyl)-Eisen, -Mangan, -Kobalt, -Chrom, -Wolfram oder -Molybdän und das Anion ein Trifluormethansulfonat-, Perchlorat-, Tetrafluorborat-, Hexafluorphosphat-, Hexafluorarsenat- oder Hexafluorantimonat-Ion sind.

7. Verfahren nach einem der vorhergehenden Ansprüche, worin das Epoxidharz ein cycloaliphatisches Epoxidharz, ein gegebenenfalls vorverlängerter Polyglycidylether eines mehrwertigen Alkohols oder eines mehrwertigen Phenols oder ein Polyglycidylester einer Polycarbonsäure ist.

8. Verfahren nach einem der vorhergehenden Ansprüche, dadurch gekennzeichnet, dass das Salz in einer Menge von 0,1 bis 10 Gewichtsprozent, bezogen auf das Gewicht des Expoxidharzes, verwendet wird.

9. Verfahren nach einem der vorhergehenden Ansprüche, dadurch gekennzeichnet, dass man das Epoxidharz mit dem Salz in einem organischen oder wässrig-organischen Lösungsmittel vermischt, eine Metalloberfläche als Anode und als Kathode ein inertes Metall einführt und Strom hindurchleitet, bis sich auf der Anode eine ausreichend dicke Schicht des polymerisierten Harzes abgeschieden hat.

10. Verfahren nach Anspruch 9, worin die Konzentration des Epoxidharzes in der Lösung 5 bis 50 Gewichtsprozent beträgt.

11. Verfahren nach Anspruch 9 oder 10, dadurch gekennzeichnet, dass die Abscheidung bei Temperaturen zwischen 0 und 80 °C durchgeführt wird.

12. Verfahren nach einem der vorhergehenden

Ansprüche, dadurch gekennzeichnet, dass man eine Spannung von 15 V und 150 V anlegt.

**Claims**

1. A method of coating a metallic surface which comprises passing an electric current at a voltage of at least 15 volts between the metallic surface as anode and a cathode in contact with a composition containing (A) an epoxy resin and (B) a salt of formula I

$$[A^{y+}][Z^-]_y \qquad (I)$$

where, in the salt (B), $A^{y+}$ is a metal cation, metal complex cation, organometallic cation, heterocyclic cation, ammonium cation, sulphoxonium cation, substituted ammonium cation, or a phosphonium cation, and y is 1, 2 or 3, and $Z^-$ is an anion selected from the group comprising perchlorate, trifluoromethane sulphonate, pentafluorohydroxo-antimonate and complex anions of formula $MQ_d^-$, in which M is a metal atom or metalloid atom selected from boron, phosphorus, antimony and arsenic, Q is a halogen atom, and d is 4 or 6, where d is one more than the valency of M.

2. A method according to claim 1, in which the metal surface is a ferrous metal.

3. A method according to any one of the preceding claims, in which the cation $A^{y+}$ is the cation of a metal, an ammonium cation, a substituted phosphonium cation of formula II

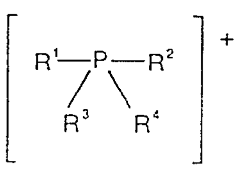

(II)

or a substituted ammonium cation of formula III

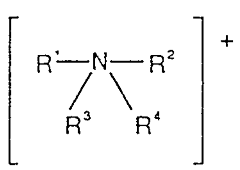

(III)

in which $R^1$, $R^2$, $R^3$ und $R^4$ independently of one another are unsubstituted or substituted alkyl, alkenyl, aryl, aralkyl, cycloalkyl or cycloalkylalkyl groups, or $R^1$ and $R^2$ and/or $R^3$ and $R^4$, together with the nitrogen or phosphorus atom to which they are attached, form a heterocyclic ring which may contain one or more additional hetero atoms.

4. A method according to any one of the preceding claims, in which the salt is a sodium, potassium, magnesium, ammonium, substituted phosphonium or ammonium salt of formula II or III, in which $R^1$, $R^2$, $R^3$ and $R^4$ independently of one another are unsubstituted alkyl groups of up to 6 carbon atoms, aralkyl groups of 7 to 10 carbon atoms or aryl groups of 6 to 10 carbon atoms, and the anion of the salt is a trifluoromethanesulphonate, perchlorate, tetrafluoroborate, hexafluorophosphate, hexafluoroarsenate or hexafluoroantimonate ion.

5. A method according to claim 1 or 2, in which the cation $A^{y+}$ is a trimethylsulphoxonium, acetylmethyldimethylsulphoxonium, 2,4,6-alkylpyrylium, 2,4,6-arylpyrylium, a transition metal ammonium or amine complex, a $\eta^5$-cyclopentadienyltricarbonyl, $\eta^6$-arenetricarbonyl, $\eta^7$-cycloheptatrienyltricarbonyl, bis($\eta^5$-cyclopentadienyl), bis($\eta^6$-arene)- or ($\eta^6$-arene)-($\eta^5$-cyclopentadienyl) transition metal cation.

6. A method according to claim 5, in which the cation $A^{y+}$ is $\eta^6$-arenetricarbonyl or($\eta^6$-arene)-($\eta^5$--cyclopentadienyl) iron, manganese, cobalt, chromium, tungsten or molybdenum and the anion is a trifluoromethanesulphonate, perchlorate, tetrafluoroborate, hexafluorophosphate, hexafluoroarsenate or hexafluorantimonate ion.

7. A method according to any one of the preceding claims, in which the epoxy resin is a cycloaliphatic epoxy resin, a polyglycidyl ether, which may have been advanced, of a polyhydric alcohol or of a polyhydric phenol, or a polyglycidyl ester of a polycarboxylic acid.

8. A method according to any one of the preceding claims, wherein the salt is used in an amount of from 0.1 to 10 per cent by weight, based on the weight of the epoxy resin.

9. A method according to any one of the preceding claims, which comprises mixing the epoxy resin with the salt in an organic or aqueous organic solvent, inserting a metallic surface as the anode and an inert metal as the cathode and passing a current through until a sufficiently thick layer of polymerized resin has been deposited on the anode.

10. A method according to claim 9, in which the concentration of epoxy resin in the solution is 5 to 50 per cent by weight.

11. A method according to claim 9 or 10, wherein the deposition is carried out at temperatures between 0 and 80 °C.

12. A method according to any one of the preceding claims, wherein a voltage from 15 V to 150 V is applied.

**Revendications**

1. Procédé pour revêtir des surfaces de métaux selon lequel on fait passer un courant, sous une tension d'au moins 15 V, entre la surface de métal comme anode et une cathode, qui sont toutes deux en contact avec un mélange de substances contenant: (A) une résine époxyde, et (B) un sel de formule I:

$$[A^{y+}][Z^-]_y \qquad (I)$$

où, dans le sel (B), $A^{y+}$ représente un cation de métal, de complexe de métal, organo-métallique, hétérocyclique, de cation ammonium, sulfoxonium, ammonium substitué ou phosphonium substitué, et y vaut 1, 2 ou 3, et $Z^-$ représente un

anion choisi parmi un anion perchlorat, trifluorométhane sulfonate, pentafluorohydroxoantimoniate et des anions complexes de formule $MQ_d^-$, dans laquelle M représente un atome de métal ou de métalloïde choisi parmi le bore, le phosphore, l'antimoine et l'arsenic, Q représente un atome d'halogène, et d vaut 4 ou 6, la valeur de d étant supérieure d'une unité à la valence de M.

2. Procédé selon la revendication 1, dans lequel la surface de métal est celle d'un métal contenant du fer.

3. Procédé selon l'une des revendications précédentes, dans lequel le cation $A^{y+}$ représente le cation d'un métal, un cation ammonium, un cation phosphonium substitué de formule II:

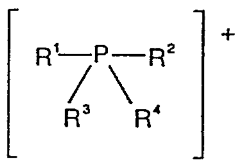

(II)

ou un cation ammonium substitué de formule III:

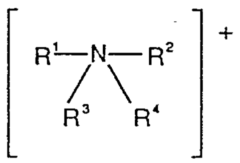

(III)

où $R^1$, $R^2$, $R^3$ et $R^4$ représentent chacun, indépendamment l'un de l'autre, des groupes alkyles, alcényles, aryles, aralkyles, cycloalkyles et cycloalkylalkyles substitués ou non substitués, ou bien $R^1$ et $R^2$ et/ou $R^3$ et $R^4$, pris avec l'atome d'azote ou de phosphore auquel ils sont fixés, forment un noyau hétérocyclique qui peut contenir un ou plusieurs autres hétéro-atomes.

4. Procédé selon l'une des revendications précédentes, dans lequel le sel est un sel de sodium, de potassium, de magnésium, d'ammonium, de phosphonium ou d'ammonium substitués de formule II ou III, les symboles $R^1$, $R^2$, $R^3$ et $R^4$ représentant, indépendamment l'un de l'autre, des groupes alkyles non substitués comportant jusqu'à 6 atomes de carbone, des groupes aralkyles ayant 7 à 10 atomes de carbone ou des groupes aryles ayant 6 à 10 atomes de carbone, et l'anion du sel est un ion trifluorométhanesulfonate, perchlorate, tétrafluoroborate, hexafluorophosphate, hexafluoro-arséniate ou hexafluoro-antimoniate.

5. Procédé selon la revendication 1 ou 2, dans lequel le cation $A^{y+}$ est un cation triméthylsulfoxonium, acétylméthyldiméthylsulfoxonium, alkyl-2,4,6 ou aryl-2,4,6 pyrylium, un cation complexe d'ammonium ou d'amine de métal de transition, un cation $\eta^5$-cyclopentadiényltricarbonyl-, $\eta^6$-arènetricarbonyl-, $\eta^7$-cycloheptatriényltricarbonyl-, bis($\eta^5$-cyclopentadiényl)-, bis ($\eta^6$-arène)- ou ($\eta^6$-arène)-($\eta^5$-cyclopentadiényl)-métal de transition.

6. Procédé selon la revendication 5, dans lequel le cation $A^{y+}$ est un cation $\eta^6$-arènetricarbonyl- ou ($\eta^6$-arène) ($\eta^5$-cyclopentadiényl)-fer, -manganèse, -cobalt, -chrome, -tungstène ou -molybdène, et l'anion est un ion trifluorométhane sulfonate, perchlorate, tétrafluoroborate, hexafluorophosphate, hexafluoroarséniate ou hexafluoroantimoniate.

7. Procédé selon l'une des revendications précédentes, dans lequel la résine époxyde est une résine époxyde, cycloaliphatique, un éther-oxyde polyglycidylique, éventuellement préallongé, d'un polyalcool ou d'un polyhénol ou est un ester polyglycidylique d'un acide polycarboxylique.

8. Procédé selon l'une des revendications précédentes, caractérisé en ce qu'on utilise le sel en une quantité de 0,1 à 10% en poids, sur la base du poids de la résine époxyde.

9. Procédé selon l'une des revendications précédentes, caractérisé en ce qu'on mélange la résine époxyde avec le sel dans un solvant organique ou hydro-organique, on introduit une surface de métal comme anode et, comme cathode, un métal inerte, et l'on fait passer du courant jusqu'à dépôt sur l'anode d'une couche d'épaisseur suffisante de la résine polymérisée.

10. Procédé selon la revendication 9, dans lequel la concentration de la résine époxyde est de 5 à 50% en poids dans la solution.

11. Procédé selon la revendication 9 ou 10, caractérisé en ce qu'on conduit le dépôt à des températures comprises entre 0 et 80 °C.

12. Procédé selon l'une des revendications précédentes, caractérisé en ce qu'on applique une tension électrique de 15 V à 150 V.